# EUROPEAN PATENT SPECIFICATION

(11) **EP 3 089 405 B1**
(45) Date of publication and mention of the grant of the patent: **01.04.2020**
(21) Application number: 16167204.3
(22) Date of filing: 27.04.2016
(51) Int. Cl.: G06F 40/157, G06F 40/169, G06F 40/205, G06F 40/279, H04W 4/18, H04W 4/12, H04L 29/08, H04L 12/58, G06Q 10/10

(54) **ELECTRONIC DEVICE AND METHOD OF PROVIDING UNIT INFORMATION**
ELEKTRONISCHE VORRICHTUNG UND VERFAHREN ZUR BEREITSTELLUNG VON EINHEITENINFORMATIONEN
DISPOSITIF ÉLECTRONIQUE ET PROCÉDÉ DE FOURNITURE D'INFORMATION D'UNITÉ

(30) Priority: 28.04.2015 US 201514698543
(43) Date of publication of application: 02.11.2016
(73) Proprietor: BlackBerry Limited, Waterloo, ON N2K 0A7 (CA)
(72) Inventor: LAU, Stephen, 212 18 Malmö (SE); TRULSSON, Felix, 211 33 Malmö (SE); TAUBERMAN, Klas, 211 45 Malmö (SE)
(74) Representative: Gill Jennings & Every LLP

(56) References cited:
- EP-A1- 2 444 923
- US-A1- 2004 176 115
- US-A1- 2008 235 242
- US-A1- 2009 152 349
- US-A1- 2014 095 562

## Description

### FIELD OF TECHNOLOGY

The present disclosure relates to portable electronic devices including touch-sensitive displays.

### BACKGROUND

Portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth® capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed.

Improvements in devices with touch-sensitive displays are desirable.

US 2014/095562 A1 discloses background information.

US 2004/176115 A1 discloses background information.

### SUMMARY

According to a first aspect, there is provided a method as set out in claim 1.

According to a second aspect, there is provided a non-transitory computer-readable medium as set out in claim 8.

According to a third aspect, there is provided an electronic device as set out in claim 9.

### BRIEF DESCRIPTION OF THE DRAWINGS

Embodiments of the present disclosure will now be described, by way of example only, with reference to the attached figures, in which:
FIG. 1 is a block diagram of a portable electronic device in accordance with the present disclosure;
FIG. 2 is a front view of an example of a portable electronic device in accordance with the disclosure;
FIG. 3 is a flowchart illustrating a method of providing unit information in accordance with the present disclosure;
FIG. 4 and FIG. 5 illustrate examples of providing unit information in accordance with the flowchart of FIG. 3;
FIG. 6 and FIG. 7 illustrate further examples of providing unit information in accordance with the flowchart of FIG. 3.

### DETAILED DESCRIPTION

The following describes an electronic device and a method of providing unit information on the electronic device is provided. The method includes displaying a message composition interface on the electronic device, and, in response to identifying a recipient of a message in the message composition interface, identifying a location associated with the recipient, analyzing message content to identify values and units of measurement, in response to identifying a first value and a first unit of measurement in the message, converting the first value and the first unit of measurement into a second value and a second unit of measurement associated with the location, and adding the second value and the second unit of measurement to the message content prior to sending the message.

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

The disclosure generally relates to an electronic device, such as a portable electronic device as described herein. Examples of electronic devices include mobile, or handheld, wireless communication devices such as cellular phones, cellular smart-phones, wireless organizers, personal digital assistants, wirelessly enabled notebook computers, tablet computers, mobile internet devices, electronic navigation devices, and so forth.

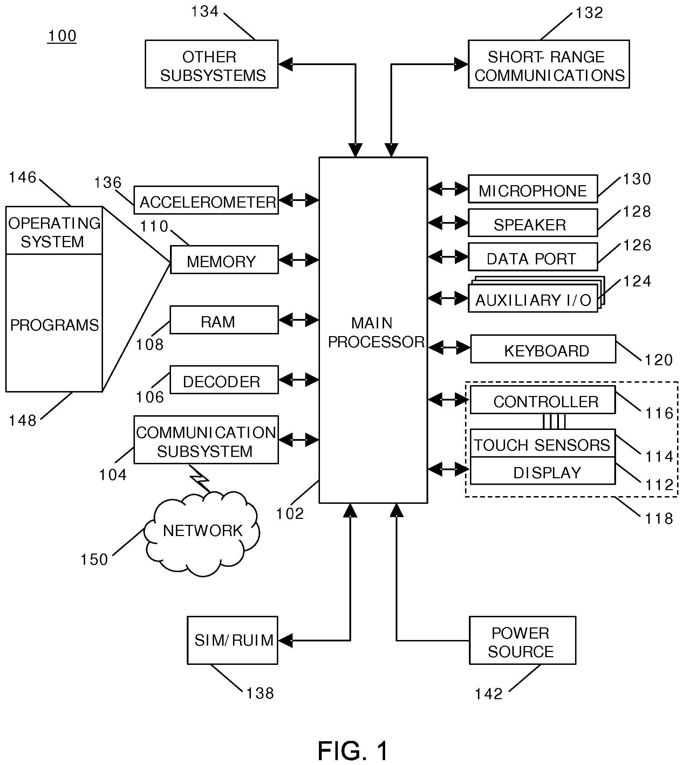

A block diagram of an example of an electronic device 100, which in the present example is a portable electronic device, is shown in FIG. 1. The electronic device 100 includes multiple components, such as a processor 102 that controls the overall operation of the electronic device 100. Communication functions, including data and voice communications, are performed through a communication subsystem 104. Data received by the electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the electronic device 100.

The processor 102 interacts with other components, such as a Random Access Memory (RAM) 108, memory 110, a touch-sensitive display 118, a keyboard 120, an auxiliary input/output (I/O) subsystem 124, a data port 126, a speaker 128, a microphone 130, short-range communications 132 and other device subsystems 134. The speaker 128, also referred to as an earpiece speaker, is utilized to output audible signals when a user's ear is very close to the speaker 128. Although not shown, the processor may also interact with a loudspeaker, for example, for handsfree use. The keyboard 120 includes a plurality of keys, which may be mechanical keys that include mechanical switches or contacts for input to the electronic device 100 when a mechanical key of the keyboard is depressed by a sufficient amount to oppose a bias of the mechanical key. Alternatively, or in addition, the keys of the keyboard may include touch sensors coupled to a controller to detect touch input thereon.

The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the electronic device 100 may utilize a Subscriber Identity Module or a Removable User Identity Module (SIM/RUIM) card 138 for communication with a network, such as the wireless network 150. Alternatively, user identification information may be programmed into memory 110.

The electronic device 100 includes an operating system 146 and software programs, applications, or components 148 that are executed by the processor 102 and are typically stored in a persistent, updatable store such as the memory 110. Additional applications or programs may be loaded onto the electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive touch-sensitive display that includes a plurality of capacitive touch sensors 114. Capacitive touch sensors 114 include drive electrodes, also known as transmission electrodes, and sense electrodes, also known as receive electrodes. The drive electrodes generally extend in one direction and cross over or under the sense electrodes, which generally extend in another direction, generally at right angles to the direction that the drive electrodes extend, to form a grid pattern. The drive electrodes are spaced from the sense electrodes by a dielectric material. The points at which the drive electrodes and the sense electrodes cross each other are referred to as nodes. The drive and sense electrodes may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

By repeatedly scanning the electrodes of the touch-sensitive display 118 to detect touches, movement of a touch relative to the touch-sensitive display 118 may be detected. One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

The touch-sensitive display 118 includes a display area in which information may be displayed, and a non-display area extending around the periphery of the display area. Information is not displayed in the non-display area by the display. The non-display area is utilized to accommodate, for example, electronic traces or electrical connections, adhesives or other sealants, and/or protective coatings around the edges of the display area. The non-display area may be referred to as an inactive area and is not part of the physical housing or frame of the electronic device. Typically, no pixels of the display are in the non-display area, thus no image can be displayed by the display 112 in the non-display area. Optionally, a secondary display, not part of the primary display 112, may be disposed in the non-display area. Touch sensors including drive electrodes and sense electrodes may be disposed in the non-display area, which touch sensors may be extended from the touch sensors in the display area or may be distinct or separate touch sensors from the touch sensors in the display area. A touch, including a gesture, may be associated with, i.e., performed on, the display area, the non-display area, or both areas. The touch sensors including the drive electrodes and the sense electrodes may extend across substantially the entire non-display area or may be disposed in only part of the non-display area.

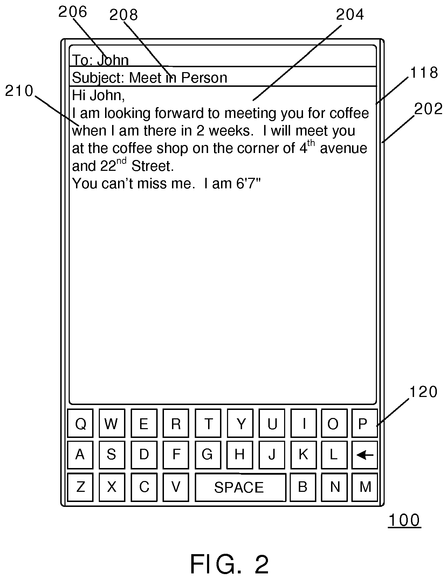

An example of an electronic device 100 is shown in FIG. 2. In the example of FIG. 2, the electronic device 100 includes a housing 202 in which the touch-sensitive display 118 is disposed. The housing 202 is utilized to enclose components such as the components shown in FIG. 1. The keyboard 120 is disposed below the touch-sensitive display 118 in the orientation illustrated in FIG. 2.

For the purpose of the example of FIG. 2, information 204 is displayed on the touch-sensitive display 118. The information 204 is displayed in a message composition interface, such as an email message composition interface displayed on the touch-sensitive display 118. Thus, the user is in the process of composing the email message in FIG. 2. The email message includes a recipient field 206, in which a recipient is indicated, and message content which includes a subject field 208 and a body 210.

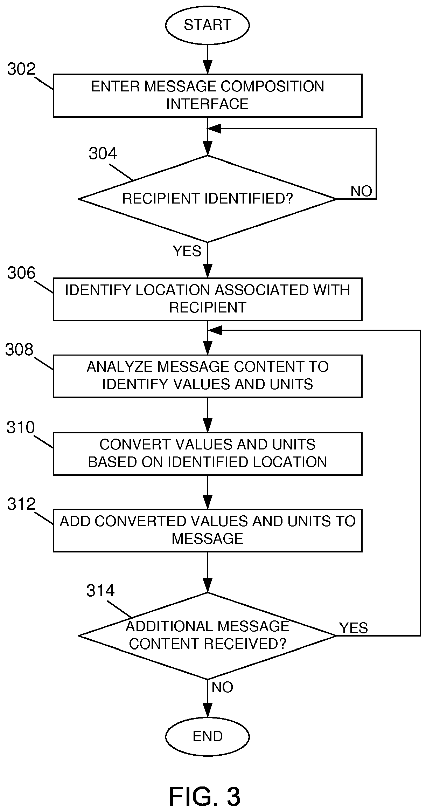

A flowchart illustrating a method of providing unit information on an electronic device is shown in FIG. 3. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor 102 of the portable electronic device 100 to perform the method may be stored in a computer-readable storage medium, such as a non-transitory computer-readable medium.

The electronic device 100 enters a message composition interface at 302. The electronic device 100 may enter the message composition interface, for example, in response to receipt of selection of an option to create a new message, in response to receipt of selection of an option to reply to an existing message, in response to launching the application, and so forth. The message composition interface may be an interface for composing an email message, a text message, an instant message, or any other suitable message type.

In response to identification of a recipient at 304, the process continues at 306. A recipient is identified when, for example, recipient information is entered into a recipient field to facilitate delivery of the message to the recipient. The recipient information may be entered by the user, utilizing, for example, the keyboard 120, or may be automatically entered, for example, in response to selection of an option to reply to a received message. The recipient information may include, for example, a recipient email address, cellular telephone number, instant messaging identification, recipient name, or any other suitable recipient contact information.

A location associated with the recipient is identified at 306. The location may be identified on the electronic device 100, for example, by identifying an address stored in a contact associated with the recipient and stored in a contacts database. Alternatively, the location may be identified by identifying a location associated with the cellular telephone number entered into the message composition interface and identified at 304 or a phone number associated with the recipient information entered into the message composition interface and identified at 304. A location associated with a phone number may be identified by country code or area code utilizing a lookup table stored on the electronic device or from information obtained utilizing a network connection. Thus, recipient information is compared to information stored on the electronic device that is associated with locations to identify an associated one of the locations. In the example of an email message, a location may also be associated with an email address, for example, based on a two-character alphabetic country code.

The electronic device 100 may utilize any one or a combination of methods to identify the location associated with the recipient. A particular order or sequence of methods may be utilized until an associated location is identified. For example, the electronic device 100 may first utilize information from a contact in the contacts database on the electronic device. If no associated location is identified based on an address or addresses stored in a contact associated with the recipient, the electronic device 100 then utilizes a phone number stored in the contacts database to identify the associated location based on country or area code. If no associated location is identified yet, for example because pertinent information is not included in the contacts database, other information may be utilized to identify the location. The other information may include the email country code for email, and the country code or area code of a cellular phone number for a text message. The information for identifying the location based on a country code or even area code may be stored on the electronic device 100 or may be obtained by a lookup process utilizing a network connection.

The message content is then analyzed to identify numerical values and units of measurement at 308. The message content may also be analyzed during typing as part of the input service. The message content may be analyzed utilizing pattern recognition to identify numbers that either numerical digits or alphabetically spelled numbers with adjacent known strings in the message content. The known strings are units of measurement of distance, weight, currency, and any other suitable units of measurement. For example, strings such as pounds, lbs, feet, ft, ', ", inches, $, dollars, km, kilometers, miles, and so forth may be identified. Thus, the strings may be identified by comparing known strings stored on the electronic device 100 to strings in the message content. Utilizing such pattern recognition, a numerical value and associated unit of measurement are identified.

Based on the unit of measurement identified at 308, a corresponding unit of measurement is determined for the location identified at 306 and a conversion is calculated at 310. Thus, the unit of measurement identified at 308 is utilized to identify a second unit of measurement that is associated with the identified location. For example, a lookup table may be utilized to identify the second unit of measurement, which is the unit of measurement that is appropriate or commonly utilized in the location associated with the recipient of the message. Optionally, the electronic device 100 may perform an online lookup, for example, for changing conversions such as monetary values. Thus, a unit if measurement of, for example, inches may be identified during message composition in a message composed at an electronic device in Arkansas, U.S.A for a message recipient in Singapore. A second unit of measurement of centimeters is identified utilizing a lookup table and a conversion factor of 2.54 is determined.

The conversion is then included in the message at 312, prior to sending the message. The conversion includes the converted numerical value and the determined second unit of measurement. The second unit of measurement and converted numerical values are included in the message by adding the second unit of measurement and converted numerical values in the content or body of the message. The converted numerical value and second unit of measurement may, for example, be inserted in brackets adjacent to the original numerical value and associated first unit of measurement. Alternatively, the converted numerical value and second unit of measurement may be inserted into the message and brackets may be inserted around the original numerical value and first unit of measurement. Alternatively the converted measurement may replace the original depending on user preferences.

The user composing the message can choose to delete the converted numerical value and units or may delete the originally entered information to thereby replace the original numerical value and unit of measurement with the converted numerical value and second unit of measurement.

In response to the addition of further message content on the electronic device 100 at 314, the process continues at 308. The process ends, for example, when the message is sent, saved, or deleted.

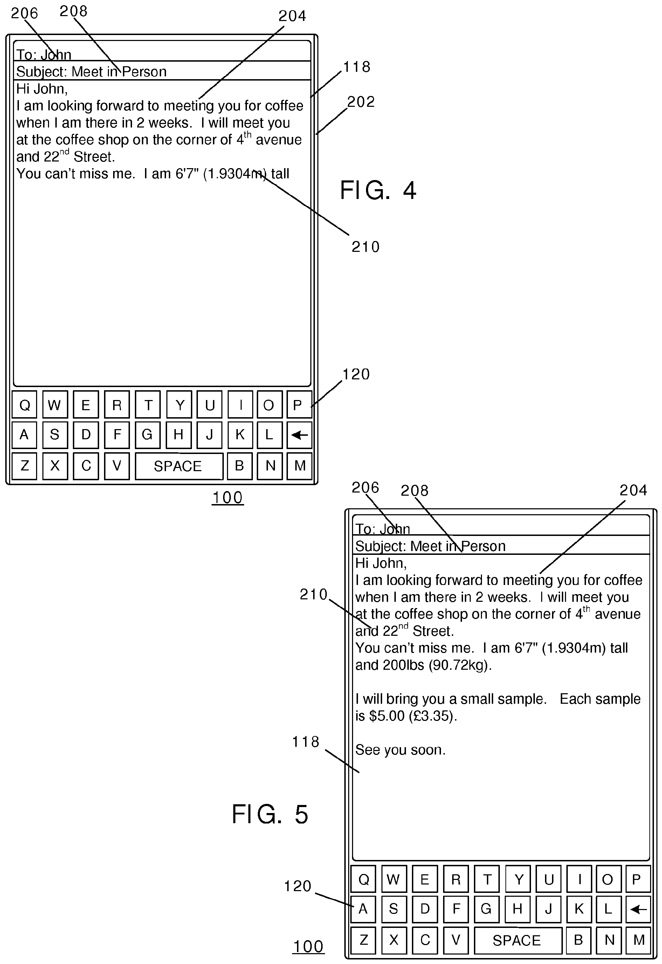

Reference is made to FIG. 2, FIG. 4, and FIG. 5 with continued reference to FIG. 3 to describe examples of providing unit information on an electronic device 100. As described above with reference to FIG. 2, an email message composition interface is provided in which an email message is composed at 302. The email message includes the recipient field 206, in which a recipient is indicated. Thus, when the recipient is entered in the recipient field 206, the recipient is identified at 304 and a location associated with the recipient is identified. For the purpose of the present example, recipient information is included in a contact stored in a contacts database on the electronic device 100 and the location is identified based on a work address of the recipient at 306. The recipient may be, for example, located in Great Britain. As the message is composed, the message content is analyzed at 308 and a numerical value and unit of measurement are identified when the content 6'7" is entered. Based on the identified location, which in this example is Great Britain, the unit meters is identified as the second unit of measurement and the numerical value of 6'7" is converted to meters at 310. The converted numerical value and the second unit of measurement is added in brackets to the message content at 312, as shown in FIG. 4. Additional message content is entered and the process continues at 308. Thus, the process continues as the user enters further message content.

The message content is analyzed at 308 as additional content is entered and a numerical value and unit of measurement are identified when the content 200lbs is entered. Based on the identified location, the unit kilograms is identified as the second unit of measurement and the numerical value of 200lbs is converted to kilograms at 310. As illustrated in FIG. 5, the converted numerical value and the second unit of measurement is added in brackets to the message content at 312. Additional message content is entered and the process continues at 308.

The message content is analyzed at 308 as additional content is entered and a numerical value and unit of measurement are identified when the content $5.00 is entered. Based on the identified location, the unit of Great Britain pound (GBP) is identified as the second unit of measurement and the numerical value of $5.00 is converted to GBP at 310. As illustrated in FIG. 5, the converted numerical value and the second unit of measurement is added in brackets to the message content at 312. Additional message content is entered and the process continues at 308. The process ends when the message is sent.

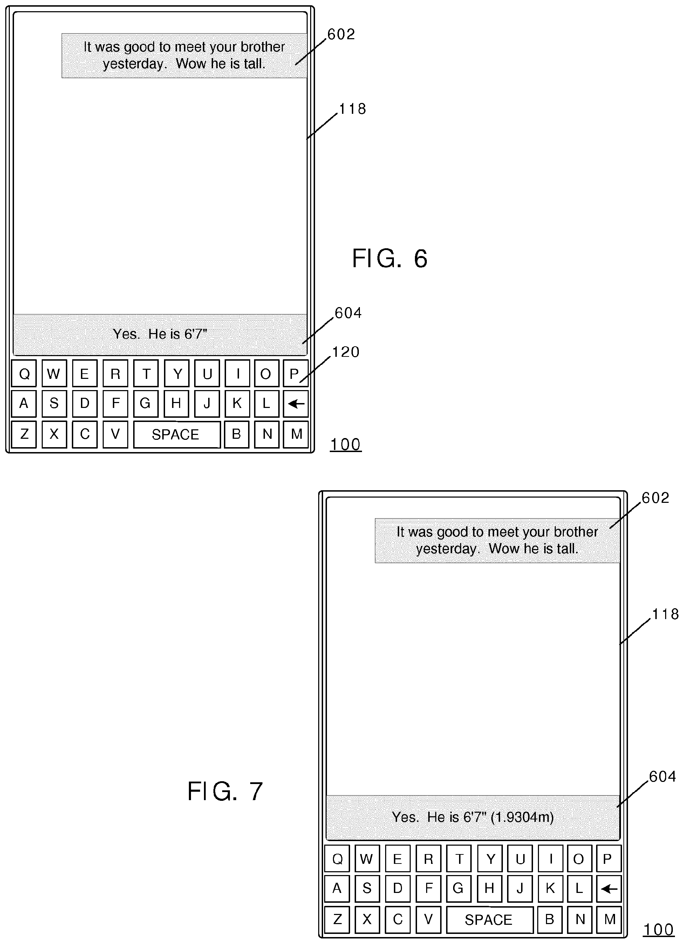

Reference is made to FIG. 6 and FIG. 7 with continued reference to FIG. 3 to describe another example of providing unit information on an electronic device 100. In the present example, a text message 602 is received at the electronic device 100 and, in response to receipt of an option to reply to the received text message, the electronic device 100 provides a text message composition interface 604. The text message composition interface 604 is provided in which a text message is composed at 302. Based on the received text message, the recipient is identified by the electronic device 100. Thus, when the selection of the reply option is received, the recipient is identified at 304 and a location associated with the recipient is identified. For the purpose of the present example, recipient information is not included in a contact stored in a contacts database on the electronic device 100. The associated location is identified based on the cellular phone number of the recipient. The associated location is in Canada. Thus, as the text message is composed utilizing the keyboard 120, the message content is analyzed at 308 and a numerical value and unit of measurement are identified when the content 6'7" is entered. Based on the identified location, which in this example is Canada, the unit meters is identified as the second unit of measurement and the numerical value of 6'7" is converted to meters at 310. The converted numerical value and the second unit of measurement are automatically added in brackets to the text message content at 312, as shown in FIG. 7.

Optionally, the electronic device 100 may also convert numerical values and units of measurements when electronic messages are received. The electronic device 100 may utilize similar methods to convert numerical values and units in messages that are received on the electronic device 100. Optionally, the electronic device 100 may provide a selectable option to convert units such that the user may view the originally received message prior to conversion of numerical values and units. Optionally the user may select a unit of measurement for conversion, such that the unit of measurement is not the same as the country that the user is in. Optionally the user may choose to use their current location as determined by GPS or other location determining service to select the units to use. Optionally a user may select to have multiple unites output.

Advantageously, numerical values and associated units of measurement are converted prior to sending a message. Thus, converted values and second units of measurement are inserted in addition to the entered values and original units of measurement such that both are provided in the message. The sender of the message may then choose to edit or delete the converted value and units or may choose to edit or delete the original value and units. Thus, the message is displayed for the sender to view prior to sending and the message that is displayed on the electronic device of the sender is the same as the message that is received at the electronic device of the recipient.

The scope of the claims should not be limited by the preferred embodiments set forth in the examples, but should be given the broadest interpretation consistent with the description as a whole.

## Claims

1. A method of providing unit information on an electronic device (100), the method comprising:
displaying a message composition interface on the electronic device;
in response to identifying a recipient of a message in the message composition interface and during composition of the message content:
identifying (306) a location associated with the recipient;
analyzing (308) the message content to identify numerical values and associated units of measurement entered on the electronic device (100);
in response to identifying a first numerical value and first unit of measurement in the message, converting (310) the first numerical value and first unit of measurement to a second numerical value and second unit of measurement associated with the location; and
adding (312) the second numerical value and second unit of measurement to the message content prior to sending the message from the electronic device (100);
wherein the second numerical value and the second unit of measurement are added to the message content during entry of the message content and prior to receipt of a send command to send the message from the electronic device (100).

2. The method according to claim 1, wherein the message content is continually analyzed during entry of the message content to identify the numerical values and units of measurement during entry of the message content.

3. The method according to claim 1, wherein analyzing the message content comprises comparing strings in the message content to known units of measurement to identify the units of measurement; and
wherein analyzing the message content comprises identifying numerical values and identifying associated strings.

4. The method according to claim 1, wherein the location associated with the recipient is identified based on information stored in a contacts database; and
wherein the location associated with the recipient is identified based on at least one of a contact number and an address stored in association with the recipient in the contacts database.

5. The method according to claim 1, wherein the message comprises a text message and the location associated with the recipient is identified based on a number in a recipient field (206) of the message.

6. The method according to claim 1, wherein identifying the location associated with the recipient comprises comparing recipient information to information associated with locations to identify an associated one of the locations.

7. The method according to claim 1, wherein the second numerical value and second unit of measurement is added to the message without deleting the first numerical value and first unit of measurement.

8. A non-transitory computer-readable medium having computer-readable code stored thereon, the computer-readable code executable by at least one processor of a portable electronic device to perform the method according to any one of claims 1 to 7.

9. An electronic device (100) comprising:
a display (112); and
a processor (102) operably coupled to the touch-sensitive display (112) and configured to:
display a message composition interface on the display (112);
in response to identifying a recipient of a message in the message composition interface and during composition of message content on the electronic device (100):
identify (306) a location associated with the recipient;
analyze (308) the message content to identify values and units of measurement;
in response to identifying a first value and first unit of measurement in the message, convert the first value and first unit of measurement into a second value and second unit of measurement associated with the location; and
add the second value and second unit of measurement to the message content prior to sending the message from the electronic device (100);
wherein the second value and the second unit of measurement are added to the message content during entry of the message content and prior to receipt of a send command to send the message from the electronic device (100).

10. The electronic device (100) according to claim 9, wherein the message content is continually analyzed during entry of the message content to identify the values and the units of measurement during entry of the message content.

11. The electronic device (100) according to claim 9, wherein the message content is analyzed by comparing strings in the message content to known units of measurement to identify the units of measurement; and
wherein the message content is analyzed to identify numerical values and associated strings.

12. The electronic device (100) according to claim 9, wherein the location associated with the recipient is identified based on information stored in a contacts database.

13. The electronic device (100) according to claim 12, wherein the location associated with the recipient is identified based on at least one of a contact number and an address stored in association with the recipient in the contacts database.

14. The electronic device (100) according to claim 9, wherein the message comprises a text message and the location associated with the recipient is identified based on a number in a recipient field (206) of the message.

15. The electronic device (100) according to claim 9, wherein the location associated with the recipient is identified by comparing recipient information to information associated with locations to identify an associated one of the locations.

## Patentansprüche

1. Verfahren zum Bereitstellen von Einheitsinformationen auf einer elektronischen Vorrichtung (100), wobei das Verfahren Folgendes umfasst:
Anzeigen einer Oberfläche zum Zusammenstellen von Nachrichten auf der elektronischen Vorrichtung;
als Reaktion auf das Identifizieren eines Empfängers einer Nachricht auf der Oberfläche zum Zusammenstellen von Nachrichten und während einer Zusammenstellung des Nachrichteninhalts:
Identifizieren (306) eines dem Empfänger zugeordneten Standorts;
Analysieren (308) des Nachrichteninhalts, um numerische Werte und zugehörige Maßeinheiten zu identifizieren, die auf der elektronischen Vorrichtung eingegeben wurden (100);
als Reaktion auf das Identifizieren eines ersten numerischen Wertes und einer ersten Maßeinheit in der Nachricht, Umwandeln (310) des ersten numerischen Wertes und der ersten Maßeinheit in einen zweiten numerischen Wert und eine zweite Maßeinheit, die dem Standort zugeordnet sind; und
Hinzufügen (312) des zweiten numerischen Wertes und der zweiten Maßeinheit zum Nachrichteninhalt vor dem Versenden der Nachricht von der elektronischen Vorrichtung (100);
wobei der zweite numerische Wert und die zweite Maßeinheit dem Nachrichteninhalt während der Eingabe des Nachrichteninhalts und vor dem Empfang eines Sendebefehls zum Senden der Nachricht von der elektronischen Vorrichtung (100) hinzugefügt werden.

2. Verfahren nach Anspruch 1, wobei der Nachrichteninhalt während der Eingabe des Nachrichteninhalts kontinuierlich analysiert wird, um die numerischen Werte und Maßeinheiten während der Eingabe des Nachrichteninhalts zu identifizieren.

3. Verfahren nach Anspruch 1, wobei das Analysieren des Nachrichteninhalts das Vergleichen von Zeichenketten im Nachrichteninhalt mit bekannten Maßeinheiten umfasst, um die Maßeinheiten zu identifizieren; und
wobei das Analysieren des Nachrichteninhalts das Identifizieren von numerischen Werten und das Identifizieren zugehöriger Zeichenketten umfasst.

4. Verfahren nach Anspruch 1, wobei der dem Empfänger zugeordnete Standort auf der Grundlage von in einer Kontaktdatenbank gespeicherten Informationen identifiziert wird; und
wobei der dem Empfänger zugeordnete Standort auf der Grundlage einer Kontaktnummer und/oder einer in Zuordnung zu dem Empfänger in der Kontaktdatenbank gespeicherten Adresse identifiziert wird.

5. Verfahren nach Anspruch 1, wobei die Nachricht eine Textnachricht umfasst und der dem Empfänger zugeordnete Standort auf der Grundlage einer Nummer in einem Empfängerfeld (206) der Nachricht identifiziert wird.

6. Verfahren nach Anspruch 1, wobei das Identifizieren des dem Empfänger zugeordneten Standorts das Vergleichen von Empfängerinformationen mit Informationen, die den Standorten zugeordnet sind, umfasst, um einen zugeordneten der Standorte zu identifizieren.

7. Verfahren nach Anspruch 1, wobei der zweite numerische Wert und die zweite Maßeinheit der Nachricht hinzugefügt wird, ohne den ersten numerischen Wert und die erste Maßeinheit zu löschen.

8. Nichtflüchtiges computerlesbares Medium, auf dem ein computerlesbarer Code gespeichert ist, wobei der computerlesbare Code von mindestens einem Prozessor einer tragbaren elektronischen Vorrichtung ausführbar ist, um das Verfahren gemäß einem der Ansprüche 1 bis 7 durchzuführen.

9. Elektronische Vorrichtung (100), die Folgendes umfasst:
eine Anzeige (112); und
einen Prozessor (102), der betriebsmäßig mit dem berührungsempfindlichen Bildschirm (112) gekoppelt und für Folgendes konfiguriert ist:
Anzeigen einer Oberfläche zum Zusammenstellen von Nachrichten auf der Anzeige (112);
als Reaktion auf das Identifizieren eines Empfängers einer Nachricht auf der Oberfläche zum Zusammenstellen von Nachrichten und während einer Zusammenstellung des Nachrichteninhalts auf der elektronischen Vorrichtung (100):
Identifizieren (306) eines dem Empfänger zugeordneten Standorts;
Analysieren (308) des Nachrichteninhalts, um numerische Werte und zugehörige Maßeinheiten zu identifizieren;
als Reaktion auf das Identifizieren eines ersten Wertes und einer ersten Maßeinheit in der Nachricht, Umwandeln des ersten Wertes und der ersten Maßeinheit in einen zweiten Wert und eine zweite Maßeinheit, die dem Standort zugeordnet sind; und
Hinzufügen des zweiten Wertes und der zweiten Maßeinheit zum Nachrichteninhalt vor dem Versenden der Nachricht von der elektronischen Vorrichtung (100);
wobei der zweite Wert und die zweite Maßeinheit dem Nachrichteninhalt während der Eingabe des Nachrichteninhalts und vor dem Empfang eines Sendebefehls zum Senden der Nachricht von der elektronischen Vorrichtung (100) hinzugefügt werden.

10. Elektronische Vorrichtung (100) nach Anspruch 9, wobei der Nachrichteninhalt während der Eingabe des Nachrichteninhalts kontinuierlich analysiert wird, um die Werte und Maßeinheiten während der Eingabe des Nachrichteninhalts zu identifizieren.

11. Elektronische Vorrichtung (100) nach Anspruch 9, wobei der Nachrichteninhalt durch das Vergleichen von Zeichenketten im Nachrichteninhalt mit bekannten Maßeinheiten analysiert wird, um die Maßeinheiten zu identifizieren; und
wobei der Nachrichteninhalt analysiert wird, um numerische Werte und zugehörige Zeichenketten zu identifizieren.

12. Elektronische Vorrichtung (100) nach Anspruch 9, wobei der dem Empfänger zugeordnete Standort auf der Grundlage von in einer Kontaktdatenbank gespeicherten Informationen identifiziert wird.

13. Elektronische Vorrichtung (100) nach Anspruch 12, wobei der dem Empfänger zugeordnete Standort auf der Grundlage einer Kontaktnummer und/oder einer in Zuordnung zum Empfänger in der Kontaktdatenbank gespeicherten Adresse identifiziert wird.

14. Elektronische Vorrichtung (100) nach Anspruch 9, wobei die Nachricht eine Textnachricht umfasst und der dem Empfänger zugeordnete Standort auf der Grundlage einer Nummer in einem Empfängerfeld (206) der Nachricht identifiziert wird.

15. Elektronische Vorrichtung (100) nach Anspruch 9, wobei der dem Empfänger zugeordnete Standort durch Vergleich von Empfängerinformationen mit Informationen, die den Standorten zugeordnet sind, identifiziert wird, um einen zugeordneten der Standorte zu identifizieren.

## Revendications

1. Procédé permettant de fournir une information d'unité sur un dispositif électronique (100), le procédé consistant à :
afficher une interface de composition de message sur le dispositif électronique ;
en réponse à l'identification d'un destinataire d'un message dans l'interface de composition de message et au moment de la composition du contenu du message, à :
identifier (306) un emplacement associé au destinataire ;
analyser (308) le contenu du message de façon à identifier des valeurs numériques et des unités de mesure associées entrées sur le dispositif électronique (100) ;
convertir (310), en réponse à l'identification d'une première valeur numérique et d'une première unité de mesure dans le message, la première valeur numérique et la première unité de mesure en une seconde valeur numérique et en une seconde unité de mesure associée à l'emplacement ; et à
ajouter (312) la seconde valeur numérique et la seconde unité de mesure au contenu du message avant d'envoyer le message à partir du dispositif électronique (100) ;
la seconde valeur numérique et la seconde unité de mesure étant ajoutées au contenu du message au moment de la saisie du contenu du message et avant la réception d'une commande d'envoi pour l'envoi du message à partir du dispositif électronique (100).

2. Procédé selon la revendication 1, dans lequel le contenu du message est constamment analysé au moment de la saisie du contenu du message, de façon à identifier les valeurs numériques et les unités de mesure au moment de la saisie du contenu du message.

3. Procédé selon la revendication 1, dans lequel l'analyse du contenu du message consiste à comparer des chaînes dans le contenu du message à des unités de mesure connues, de façon à identifier les unités de mesure ; et
l'analyse du contenu du message consistant à identifier des valeurs numériques et à identifier des chaînes associées.

4. Procédé selon la revendication 1, dans lequel l'emplacement associé au destinataire est identifié sur la base des informations stockées dans une base de données de contacts ; et
l'emplacement associé au destinataire étant identifié sur la base d'au moins un numéro de téléphone ou une adresse stockée conjointement avec le destinataire dans la base de données de contacts.

5. Procédé selon la revendication 1, dans lequel le message comprend un message textuel et l'emplacement associé au destinataire est identifié sur la base d'un numéro dans un champ destinataire (206) du message.

6. Procédé selon la revendication 1, dans lequel l'identification de l'emplacement associé au destinataire consiste à comparer des informations relatives au destinataire à des informations associées aux emplacements, de façon à identifier un emplacement associé parmi les emplacements.

7. Procédé selon la revendication 1, dans lequel la seconde valeur numérique et la seconde unité de mesure sont ajoutées au message sans supprimer la première valeur numérique et la première unité de mesure.

8. Support non transitoire lisible par ordinateur, sur lequel est stocké un code lisible par ordinateur, le code lisible par ordinateur pouvant être exécuté par au moins un processeur d'un dispositif électronique portable pour mettre en œuvre le procédé selon l'une quelconque des revendications 1 à 7.

9. Dispositif électronique (100) comprenant :
un écran (112) ; et
un processeur (102) connecté de manière fonctionnelle à l'écran tactile (112), et conçu pour :
afficher une interface de composition de message sur l'écran (112) ;
en réponse à l'identification d'un destinataire d'un message dans l'interface de composition de message et au moment de la composition du contenu du message sur le dispositif électronique (100), pour :
identifier (306) un emplacement associé au destinataire ;
analyser (308) le contenu du message de façon à identifier des valeurs et des unités de mesure ;
convertir, en réponse à l'identification d'une première valeur et d'une première unité de mesure dans le message, la première valeur et la première unité de mesure en une seconde valeur et une seconde unité de mesure associée à l'emplacement ; et pour
ajouter la seconde valeur et la seconde unité de mesure au contenu du message avant d'envoyer le message à partir du dispositif électronique (100) ;
la seconde valeur et la seconde unité de mesure étant ajoutées au contenu du message au moment de la saisie du contenu du message et avant la réception d'une commande d'envoi pour l'envoi du message à partir du dispositif électronique (100).

10. Dispositif électronique (100) selon la revendication 9, dans lequel le contenu du message est constamment analysé au moment de la saisie du contenu du message, de façon à identifier les valeurs et les unités de mesure au moment de la saisie du contenu du message.

11. Dispositif électronique (100) selon la revendication 9, dans lequel le contenu du message est analysé en comparant des chaînes dans le contenu du message à des unités de mesure connues, de façon à identifier les unités de mesure ; et
dans lequel le contenu du message est analysé de façon à identifier des valeurs numériques et des chaînes associées.

12. Dispositif électronique (100) selon la revendication 9, dans lequel l'emplacement associé au destinataire est identifié sur la base des informations stockées dans une base de données de contacts.

13. Dispositif électronique (100) selon la revendication 12, dans lequel l'emplacement associé au destinataire est identifié sur la base d'un numéro de téléphone ou d'une adresse stockée conjointement avec le destinataire dans la base de données de contacts.

14. Dispositif électronique (100) selon la revendication 9, dans lequel le message comprend un message textuel et l'emplacement associé au destinataire est identifié sur la base d'un numéro dans un champ destinataire (206) du message.

15. Dispositif électronique (100) selon la revendication 9, dans lequel l'emplacement associé au destinataire est identifié en comparant des informations relatives au destinataire à des informations associées aux emplacements, de façon à identifier un emplacement associé parmi les emplacements.
